# FASCICULE DE BREVET EUROPEEN

(11) **EP 3 106 319 B1**
(45) Date de publication et mention de la délivrance du brevet: **17.01.2018**
(21) Numéro de dépôt: 16173051.0
(22) Date de dépôt: 06.06.2016
(51) Int. Cl.: B60B 27/00

(54) **MOYEU DE PALIER À ROULEMENT INTÉGRANT UN INSERT**
NABE EINES WÄLZLAGERS, DIE EINEN EINSATZ UMFASST
ROLLER-BEARING HUB INCLUDING AN INSERT

(30) Priorité: 18.06.2015 FR 1555601
(43) Date de publication de la demande: 21.12.2016
(73) Titulaire: NTN-SNR Roulements, 74010 Annecy (FR)
(72) Inventeur: LENON, Hervé, 74540 Gruffy (FR); TEILLOU, Cyprien, 74000 Annecy (FR); MARTINEZ, Solène, 73100 Aix Les Bains (FR)
(74) Mandataire: Sayettat, Julien Christian

(56) Documents cités:
- EP-A1- 1 859 958
- EP-A1- 2 863 082
- CN-A- 103 703 262
- FR-A1- 2 988 066

## Description

L'invention concerne un moyeu de palier à roulement, ainsi qu'un palier à roulement comprenant un tel moyeu et un organe extérieur disposé autour dudit moyeu pour le montage en rotation relative de deux éléments.

L'invention s'applique plus particulièrement au montage d'un élément roulant de véhicule notamment automobile sur un élément de suspension dudit véhicule, ledit élément roulant comprenant notamment une roue et un disque de frein.

Pour le montage d'un tel élément roulant, on connaît des paliers dans lesquels l'organe extérieur et le moyeu portent chacun au moins une piste de roulement qui sont disposées en regard pour réaliser au moins un chemin de roulement dans lequel une rangée de corps roulants est disposée afin de permettre la rotation relative du moyeu et de l'organe extérieur (pour exemple dans EP 1 859 958 A) Selon une réalisation, le moyeu comprend un fût autour duquel l'organe extérieur est monté en rotation et un flasque de fixation qui est disposé autour dudit fût. Ainsi, en associant l'organe extérieur à un élément de suspension du véhicule, on peut monter en rotation l'élément roulant en le fixant au flasque.

De par l'intégration des différentes fonctions et des sollicitations mécaniques qui en résultent, les paliers à roulement sont relativement massifs, ce qui pose des problèmes de poids, d'encombrement et de coûts.

Pour résoudre ces problèmes, on a proposé d'utiliser un matériau plus léger que l'acier à roulement qui est classiquement utilisé, par exemple à base de matériau composite. Mais, ce remplacement se fait au détriment de la résistance mécanique et il n'est donc envisageable qu'au niveau des parties du palier les moins contraintes mécaniquement, tel qu'un noyau comprenant le flasque de fixation lorsqu'il n'est pas sollicité par les pressions de roulement des corps roulants.

Toutefois, l'utilisation d'un tel noyau composite peut s'avérer insuffisant pour des sollicitations d'amplitude importante. En particulier, durant l'utilisation du moyeu, le flasque est fortement sollicité, notamment du fait des charges exercées par l'élément tournant, ce qui peut entraîner des efforts de déplacement du noyau composite, notamment relativement à un fût réalisé en acier, conduisant alors à un risque de décohésion du moyeu.

L'invention a pour but de perfectionner l'art antérieur en proposant notamment un moyeu de palier à roulement utilisant un noyau composite pour optimiser le compromis entre la masse et la résistance mécanique, ledit moyeu étant notamment agencé pour améliorer la fiabilité sous charge de la cohésion du noyau dans ledit moyeu.

A cet effet, selon un premier aspect, l'invention propose un moyeu de palier à roulement comprenant un fût structurel auquel est surmoulé un noyau composite réalisé à base d'au moins une résine polymère, ledit noyau présentant un flasque et un embout qui sont disposés respectivement autour et dans un alésage dudit fût, le noyau intégrant un insert qui est disposé dans l'embout, ledit insert étant enrobé dans ladite résine polymère et comprenant des fibres qui sont orientées axialement depuis le flasque.

Selon un deuxième aspect, l'invention propose un palier à roulement pour le montage en rotation relative de deux éléments, ledit palier comprenant un tel moyeu et un organe extérieur disposé autour dudit moyeu, ledit organe extérieur et le fût structurel dudit moyeu portant chacun au moins une piste de roulement qui sont disposées en regard pour réaliser au moins un chemin de roulement dans lequel une rangée de corps roulants est disposée afin de permettre la rotation relative du moyeu et de l'organe extérieur.

D'autres objets et avantages de l'invention apparaîtront dans la description qui suit, faite en référence aux figures annexées, dans lesquelles :
- les figures 1 représentent, selon respectivement une coupe longitudinale, un moyeu d'un palier à roulement selon un mode de réalisation de l'invention ;
- la figure 2 représente en perspective interne l'insert du noyau du moyeu selon les figures 1 ;
- la figure 3a représente en perspective interne l'insert et l'armature du noyau du moyeu des figures 1, la figure 3b représentant en perspective interne ledit noyau sans le fût structurel ;
- les figures 4 représentent en perspective externe un moyeu selon un autre mode de réalisation de l'invention, respectivement en vue totale (figure 4a) et en vue partielle montrant l'armature (figure 4b).

En relation avec ces figures, on décrit ci-dessous un palier à roulement pour le montage en rotation relative de deux éléments, ledit palier comprenant un moyeu 1 et un organe extérieur (non représenté) disposé autour dudit moyeu. Dans la description, les termes « extérieur » et « intérieur » sont définis par rapport à l'axe A de rotation du palier, respectivement pour une localisation éloignée et proche dudit axe.

Dans le mode de réalisation représenté, le palier est destiné au montage d'un élément roulant de véhicule notamment automobile sur un élément de suspension dudit véhicule, ledit élément roulant comprenant notamment une roue et un disque de frein.

Pour ce faire, le moyeu 1 comprend un fût structurel 2 monté tournant dans l'organe extérieur et autour duquel est disposé un flasque 3 de fixation de l'élément roulant, l'organe extérieur présentant des moyens d'association à un élément de suspension du véhicule. Toutefois, l'invention n'est pas limitée à une telle application et peut s'appliquer à un montage dans lequel l'organe extérieur est tournant et le moyeu 1 est fixe.

De façon avantageuse, la périphérie du fût 2 est agencée pour permettre le montage en rotation autour d'elle d'au moins un organe extérieur du palier à roulement. En particulier, la périphérie du fût 2 et l'organe extérieur portent chacun au moins une piste de roulement 4 qui sont disposées en regard pour réaliser au moins un chemin de roulement dans lequel une rangée de corps roulants est disposée afin de permettre la rotation relative du moyeu 1 dans l'organe extérieur.

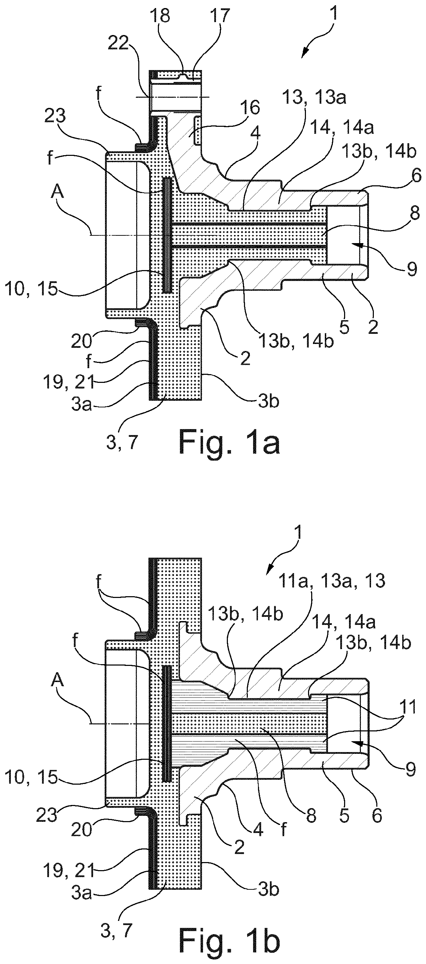

Dans le mode de réalisation représenté, le fût 2 présente une piste de roulement externe 4 et une portée interne 5 destinée à recevoir une bague sur laquelle une piste de roulement interne est formée, le bord libre 6 de ladite portée pouvant être replié pour former une collerette de précharge axiale de ladite bague sur la périphérie du fût 2. Dans la description, les termes « externe » et « interne » sont définis par rapport au montage du palier sur le véhicule, respectivement à gauche et à droite sur les figures 1.

En particulier, le moyeu 1 comprend un noyau 7 qui est associé par surmoulage au fût structurel 2 et qui présente, en plus du flasque 3, un embout 8 qui est disposé dans un alésage 9 dudit fût, afin d'améliorer la cohésion du moyeu 1.

Le fût structurel 2 et le noyau 7 sont réalisés en deux pièces qui sont chacune optimisées, notamment au niveau du matériau les constituant, relativement aux efforts mécaniques auxquels elles doivent résister. De façon avantageuse, le fût 2 peut être réalisé dans un matériau métallique, notamment en acier à roulement de type 100Cr6, pour supporter les pressions de contact de roulement.

Par ailleurs, pour optimiser le poids du palier tout en supportant les contraintes mécaniques venant de l'élément roulant, le noyau 7, et donc le flasque 3, est réalisé à base d'un matériau composite formé à base d'au moins une résine polymère, par exemple à base d'une résine époxy. En outre, le flasque 3 peut présenter des évidements qui sont agencés pour diminuer son poids sans compromettre sa tenue mécanique.

En particulier, le noyau 7 peut être réalisé à base d'au moins une résine polymère chargée en fibres, par exemple des fibres de carbone, lesdites fibres étant notamment dispersées aléatoirement dans ladite résine. En effet, un tel matériau composite peut supporter des sollicitations diverses, ce qui permet d'absorber en partie les contraintes subies par le noyau 7 lors de l'utilisation du moyeu 1, et donc d'assurer une bonne association du noyau 7 au fût 2 en limitant les déformations résultant desdites contraintes.

Toutefois, un tel matériau composite peut s'avérer insuffisant pour des sollicitations d'amplitude plus importante. En particulier, durant l'utilisation du moyeu 1, le flasque 3 est fortement sollicité, du fait des charges exercées par l'élément tournant, ce qui peut entraîner des déformations dudit flasque qui peuvent conduire, notamment par déplacements de l'embout 8 dans l'alésage 9, à une décohésion du moyeu 1.

Par ailleurs, du fait des charges exercées par les pistes de roulement, le fût structurel 2, et donc l'embout 8, sont également sollicités, ce qui peut avoir un impact négatif sur l'interface entre l'embout 8 et l'alésage 9, et donc sur l'association dudit embout dans ledit alésage.

Pour pallier ces inconvénients, le noyau 7 intègre un insert 10 qui est disposé dans l'embout 8, ledit insert étant enrobé dans la résine polymère dudit embout et comprenant des fibres f qui sont orientées axialement depuis le flasque 3. Selon une réalisation, l'insert 10 peut comprendre un faisceau de fibres f orientées axialement. En variante, l'insert 10 peut être formé à partir d'une structure, par exemple tissée, stratifiée ou en sandwich, comprenant notamment les fibres f orientées axialement.

En particulier, l'insert 10 peut être formé d'au moins une résine polymère dans laquelle les fibres sont pré-imprégnées, ledit insert étant surmoulé par la résine du noyau 7 lors du surmoulage du fût structurel 2. En variante, l'insert 10 peut être issu d'autres techniques de fabrication de matériaux composites, par exemple par moulage, notamment par injection basse pression (RTM), ou pultrusion.

En effet, les fibres orientées de manière unidirectionnelle permettent à un matériau composite de supporter des sollicitations élevées, notamment en flexion et en traction, et plus particulièrement suivant la direction d'orientation desdites fibres. Ainsi, l'insert 10 améliore la résistance globale du moyeu en fiabilisant l'association du noyau 7 au fût 2. Par ailleurs, l'enrobage de l'insert 10 dans la résine polymère formant l'embout 8 permet l'absorption des contraintes résiduelles subies par le fût 2, et ce d'autant plus si ladite résine polymère comprend des fibres dispersées aléatoirement.

Dans le mode de réalisation représenté, l'insert 10 comprend des pattes 11 qui s'étendent axialement dans l'embout 8 et qui sont formées chacune avec des fibres f orientées axialement. En particulier, les pattes 11 sont équiréparties angulairement autour de l'axe A du moyeu 1 et s'étendent chacune radialement par rapport audit axe, afin de permettre la répartition sur toute la périphérie de l'embout 8 des efforts de déformation relative exercés entre ledit embout et le flasque 3.

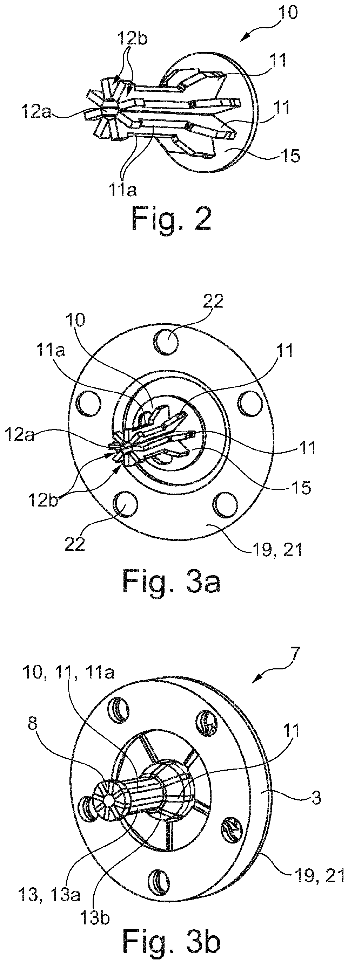

Comme représenté notamment sur les figures 2 et 3, les pattes 11 forment entre elles un conduit tubulaire 12a et des espaces angulaires 12b qui sont remplis de résine polymère, afin notamment d'améliorer l'absorption des contraintes à l'intérieur de l'embout 8.

En particulier, l'insert 10 présente un nombre de pattes 11 qui est choisi pour assurer un bon compromis entre la répartition des efforts de déformation et l'absorption des contraintes résiduelles. A cet effet, un insert 10 comprenant un nombre impair de pattes 11, notamment trois ou cinq pattes 11, s'avère particulièrement avantageux, en ce qu'il permet, en plus d'améliorer la répartition sur l'embout 8 des efforts exercés par le flasque 3, de disposer d'espaces angulaires 12b suffisamment grands pour un enrobage satisfaisant desdites pattes.

En relation avec les figures 1, les pattes 11 s'étendent axialement sur sensiblement toute la longueur de l'embout 8, afin de permettre la répartition des efforts exercés par le flasque 3 sur toute la longueur dudit embout.

Pour améliorer le maintien axial de l'embout 8 dans l'alésage 9, l'embout 8 et/ou l'alésage 9 peut présenter un moyen géométrique d'ancrage dudit embout dans ledit alésage. En relation avec les figures 1 à 3, l'alésage 9 présente une couronne 14 d'ancrage qui fait saillie radialement depuis la paroi périphérique dudit alésage, les parois extérieures des pattes 11 présentant chacune une empreinte allongée 11a formant une empreinte annulaire complémentaire 13 qui s'étend autour de l'embout 8 en assurant l'ancrage dudit embout sur la couronne 14.

En particulier, la couronne 14 et l'empreinte complémentaire 13 présentent respectivement une portée axiale 14a et une portée axiale complémentaire 13a qui sont formées respectivement entre deux portées radiales 14b et deux portées radiales complémentaires 13b, la portée axiale 14a épousant la portée axiale complémentaire 13a et les portées radiales 14b venant en appui axial contre les portées radiales complémentaires 13b lorsque l'embout 8 est surmoulé dans l'alésage 9.

L'insert 10 comprend en outre un plateau 15 qui s'étend radialement dans le flasque 3 et qui comprend des fibres f orientées radialement, ainsi qu'une paroi interne depuis laquelle s'étendent les pattes 11, afin notamment d'améliorer la répartition des efforts de déformation exercés par le flasque 3.

En particulier, le plateau 15 et les pattes 11 peuvent être formés à partir des mêmes fibres f, lesdites fibres comprenant chacune une portion externe et une portion interne qui sont orientées respectivement radialement et axialement pour former respectivement ledit plateau et lesdites pattes. En variante, les fibres axiales f des pattes 11 s'étendent jusqu'au plateau 15 qui comprend des fibres radiales f distinctes.

Selon une réalisation, le fût 2 présente une bride 16 d'association à l'élément roulant sur laquelle le flasque 3 est surmoulé, ladite bride présentant des conduits 17 d'association dudit élément roulant qui débouchent dans ledit flasque.

En relation avec les figures 1, le flasque 3 s'étend axialement entre une paroi externe 3a et une paroi interne 3b, et la bride 16 s'étend radialement depuis le bord externe du fût 2 en présentant d'une seule pièce des conduits 17 qui débouchent de part et d'autre dans lesdites parois. De façon avantageuse, chacun des conduits 17 présente un jonc extérieur 18 qui est agencé pour fiabiliser l'accrochage axial des conduits 17 dans le flasque 3, et donc la cohésion du moyeu 1.

La paroi externe 3a intègre en outre une armature 19 qui présente au moins une portée annulaire 20, 21 sur laquelle l'élément roulant est destiné à être monté pour être fixé au moyeu 1. En particulier, l'armature 19 présente une portée annulaire 20 qui s'étend axialement autour de l'alésage 9 et une portée annulaire 21 qui s'étend radialement autour dudit alésage, l'élément roulant présentant un alésage qui est disposé sur la portée annulaire 20 en assurant une concentricité parfaite du montage dudit élément roulant sur le flasque 3 avant sa fixation dans les conduits 17.

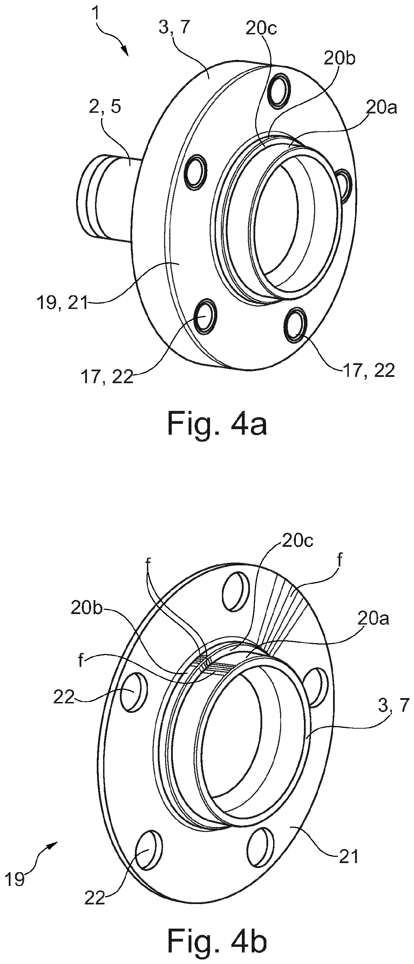

Dans le mode de réalisation représenté sur les figures 4, l'armature 19 présente deux portées annulaires respectivement distale 20a et proximale 20b qui s'étendent axialement respectivement suivant un diamètre en étant raccordées par une portée radiale 20c, la portée distale 20a de plus petit diamètre permettant le centrage de la jante et la portée proximale 20b celui du disque de frein.

Par ailleurs, comme représenté sur la figure 1, le flasque 3 peut éventuellement comprendre une extension tubulaire 23 qui s'étend axialement au-delà de la portée 20 de l'armature 19.

L'armature 19 est enrobée dans la résine polymère du flasque 3 et comprend des fibres f qui sont orientées le long d'au moins une portée 20, 20a-20c, 21. Selon une réalisation, l'armature 19 peut comprendre un faisceau de fibres f orientées. En variante, l'armature 19 peut être formée à partir d'une structure, par exemple tissée, stratifiée ou en sandwich, comprenant notamment les fibres f orientées.

En particulier, l'armature 19 peut être formée d'au moins une résine polymère dans laquelle les fibres f sont pré-imprégnées, ladite armature étant surmoulée par la résine du noyau 7 lors du surmoulage du fût structurel 2. En variante, l'armature 19 peut être issue d'autres techniques de fabrication de matériaux composites, par exemple par moulage, notamment par injection basse pression (RTM), ou pultrusion.

Dans le mode de réalisation des figures 1 à 3, les portées axiale 20 et radiale 21 comprennent des fibres f qui sont réparties sur lesdites portées en étant orientées respectivement axialement et radialement. De même, dans le mode de réalisation des figures 4, les portées distale 20a et proximale 20b comprennent toutes deux des fibres f orientées axialement, et les portées radiales 20c, 21 comprennent toutes deux des fibres f orientées radialement.

En particulier, les portées 20, 20a-20c, 21 peuvent être formées à partir des mêmes fibres f, lesdites fibres comprenant chacune des portions consécutives qui sont orientées respectivement axialement et radialement pour former respectivement les portées annulaires axiales 20, 20a, 20b et les portées annulaires radiales 20c, 21. En variante, les fibres axiales f des portées annulaires 20, 20a, 20b s'étendent jusqu'à la portée radiale 20c, 21 adjacente qui comprend des fibres radiales f distinctes.

Ainsi, lorsque l'élément roulant est fixé en appui sur la paroi externe 3a du flasque 3, au moins une portée 20, 20a-20c, 21 de l'armature 19 est interposée entre ledit élément et ladite paroi externe pour pouvoir renforcer ladite paroi, notamment relativement aux risques de déformations par fluage. En particulier, la portée annulaire 21 peut s'étendre sur sensiblement toute la paroi externe 3a en prévoyant qu'elle présente des orifices 22 dans lesquels respectivement un conduit de fixation 17 débouche.

## Revendications

1. Moyeu (1) de palier à roulement comprenant un fût structurel (2) auquel est surmoulé un noyau composite (7) réalisé à base d'au moins une résine polymère, ledit noyau présentant un flasque (3) et un embout (8) qui sont disposés respectivement autour et dans un alésage (9) dudit fût, ledit moyeu étant **caractérisé en ce que** le noyau (7) intègre un insert (10) qui est disposé dans l'embout (8), ledit insert étant enrobé dans ladite résine polymère et comprenant des fibres (f) qui sont orientées axialement depuis le flasque (3).

2. Moyeu (1) selon la revendication 1, **caractérisé en ce que** l'embout (8) et/ou l'alésage (9) présente un moyen géométrique (13, 14) d'ancrage dudit embout dans ledit alésage.

3. Moyeu (1) selon l'une des revendications 1 ou 2, **caractérisé en ce que** l'insert (10) s'étend axialement sur sensiblement toute la longueur de l'embout (8).

4. Moyeu (1) selon l'une quelconque des revendications 1 à 3, **caractérisé en ce que** l'insert (10) comprend des pattes (11) qui s'étendent axialement dans l'embout (8), lesdites pattes étant formées chacune avec des fibres (f) orientées axialement.

5. Moyeu (1) selon la revendication 4, **caractérisé en ce que** les pattes (11) sont équiréparties angulairement autour de l'axe (A) dudit moyeu, lesdites pattes formant entre elles un conduit tubulaire (12a) et des espaces angulaires (12b) qui sont remplis de résine polymère.

6. Moyeu (1) selon la revendication 5, **caractérisé en ce que** les pattes (11) s'étendent chacune radialement par rapport à l'axe (A) dudit moyeu.

7. Moyeu (1) selon l'une quelconque des revendications 4 à 6, **caractérisé en ce que** l'insert (10) comprend un nombre impair de pattes (11).

8. Moyeu (1) selon l'une quelconque des revendications 1 à 7, **caractérisé en ce que** l'insert (10) comprend un plateau (15) qui s'étend radialement dans le flasque (3) et qui comprend des fibres (f) orientées radialement.

9. Moyeu (1) selon la revendication 8 quand elle dépend de la revendication 4, **caractérisé en ce que** le plateau (15) comprend une paroi interne depuis laquelle s'étendent les pattes (11).

10. Moyeu (1) selon l'une quelconque des revendications 1 à 9, **caractérisé en ce que** l'insert (10) est formé d'au moins une résine polymère dans laquelle les fibres (f) sont pré-imprégnées.

11. Moyeu (1) selon l'une quelconque des revendications 1 à 10, **caractérisé en ce que** le fût (2) présente une bride (16) d'association à un élément roulant sur laquelle le flasque (3) est surmoulé.

12. Moyeu (1) selon la revendication 11, **caractérisé en ce que** la bride (16) présente des conduits (17) d'association de l'élément roulant au moyeu (1), lesdits conduits débouchant dans le flasque (3).

13. Moyeu (1) selon l'une quelconque des revendications 1 à 12, **caractérisé en ce que** le noyau composite (7) est réalisé à base d'au moins une résine polymère chargée en fibres, lesdites fibres étant notamment dispersées aléatoirement dans ladite résine, l'insert (10) étant enrobé dans ladite résine chargée.

14. Palier à roulement pour le montage en rotation relative de deux éléments, ledit palier comprenant un moyeu (1) selon l'une quelconque des revendications 1 à 13 et un organe extérieur disposé autour dudit moyeu, ledit organe extérieur et le fût structurel (2) dudit moyeu portant chacun au moins une piste de roulement (4) qui sont disposées en regard pour réaliser au moins un chemin de roulement dans lequel une rangée de corps roulants est disposée afin de permettre la rotation relative du moyeu (1) et de l'organe extérieur.

## Patentansprüche

1. Wälzlagernabe (1), umfassend einen strukturellen Schaft (2), auf den ein Verbundkern (7) aufgeformt ist, hergestellt auf der Grundlage von mindestens einem Polymerharz, wobei der Kern einen Flansch (3) und ein Ansatzstück (8) aufweist, die jeweils um eine und in einer Bohrung (9) des Schafts angeordnet sind, wobei die Nabe **dadurch gekennzeichnet ist, dass** der Kern (7) einen Einsatz (10) einschließt, der im Ansatzstück (8) angeordnet ist, wobei der Einsatz in dem Polymerharz eingebettet ist und Fasern (f) umfasst, die vom Flansch (3) axial ausgerichtet sind.

2. Nabe (1) nach Anspruch 1, **dadurch gekennzeichnet, dass** das Ansatzstück (8) und/oder die Bohrung (9) ein geometrisches Mittel (13, 14) zur Verankerung des Ansatzstücks in der Bohrung aufweist.

3. Nabe (1) nach einem der Ansprüche 1 oder 2, **dadurch gekennzeichnet, dass** sich der Einsatz (10) axial auf im Wesentlichen der gesamten Länge des Ansatzstücks (8) erstreckt.

4. Nabe (1) nach einem der Ansprüche 1 bis 3, **dadurch gekennzeichnet, dass** der Einsatz (10) Füße (11) umfasst, die sich axial im Ansatzstück (8) erstrecken, wobei die Füße jeweils mit Fasern (f) gebildet sind, die axial ausgerichtet sind.

5. Nabe (1) nach Anspruch 4, **dadurch gekennzeichnet, dass** die Füße (11) um die Achse (A) der Nabe winklig gleichmäßig verteilt sind, wobei die Füße untereinander eine rohrförmige Leitung (12a) und winklige Räume (12b) bilden, die mit Polymerharz gefüllt sind.

6. Nabe (1) nach Anspruch 5, **dadurch gekennzeichnet, dass** sich die Füße (11) jeweils radial mit Bezug auf die Achse (A) der Nabe erstrecken.

7. Nabe (1) nach einem der Ansprüche 4 bis 6, **dadurch gekennzeichnet, dass** der Einsatz (10) eine ungerade Anzahl von Füßen (11) umfasst.

8. Nabe (1) nach einem der Ansprüche 1 bis 7, **dadurch gekennzeichnet, dass** der Einsatz (10) eine Platte (15) umfasst, die sich radial im Flansch (3) erstreckt, und die Fasern (f) umfasst, die radial ausgerichtet sind.

9. Nabe (1) nach Anspruch 8, wenn er von Anspruch 4 abhängt, **dadurch gekennzeichnet, dass** die Platte (15) eine innere Wand umfasst, von der sich die Füße (11) erstrecken.

10. Nabe (1) nach einem der Ansprüche 1 bis 9, **dadurch gekennzeichnet, dass** der Einsatz (10) mindestens aus einem Polymerharz gebildet ist, in dem die Fasern (f) vorimprägniert sind.

11. Nabe (1) nach einem der Ansprüche 1 bis 10, **dadurch gekennzeichnet, dass** der Schaft (2) eine Klammer (16) zur Assoziierung an ein rollendes Element aufweist, auf dem der Flansch (3) aufgeformt ist.

12. Nabe (1) nach Anspruch 11, **dadurch gekennzeichnet, dass** die Klammer (16) Leitungen (17) zur Assoziierung des rollenden Elements mit der Nabe (1) aufweist, wobei die Leitungen in den Flansch (3) münden.

13. Nabe (1) nach einem der Ansprüche 1 bis 12, **dadurch gekennzeichnet, dass** der Verbundkern (7) auf der Grundlage von mindestens einem Polymerharz hergestellt ist, das mit Fasern verstärkt ist, wobei die Fasern insbesondere zufällig in dem Harz dispergiert sind, wobei der Einsatz (10) in dem verstärkten Harz eingebettet ist.

14. Wälzlager zur Montage in relativer Drehung von zwei Elementen, wobei das Lager eine Nabe (1) nach einem der Ansprüche 1 bis 13 und ein äußeres Organ umfasst, das um die Nabe angeordnet ist, wobei das äußere Organ und der strukturelle Schaft (2) der Nabe jeweils mindestens eine Rollspur (4) umfassen, die gegenüber liegend angeordnet sind, um mindestens einen Rollweg durchzuführen, in dem ein Bereich von rollenden Körpern angeordnet ist, um die relative Drehung der Nabe (1) und des äußeren Organs zu ermöglichen.

## Claims

1. Roller-bearing hub (1) comprising a structural shaft (2) over which is cast a composite core (7) having a base that is made from at least one polymer resin, said core having a shield (3) and a tip (8) that are respectively positioned around and in a bore (9) of said shaft, said hub being **characterised in that** the core (7) incorporates an insert (10) which is positioned in the tip (8), said insert being coated in said polymer resin and comprising fibres (f) which are axially oriented from the shield (3).

2. Hub (1) according to claim 1, **characterised in that** the tip (8) and/or the bore (9) have/has a geometric means (13, 14) for anchoring said tip inside said bore.

3. Hub (1) according to either claim 1 or claim 2, **characterised in that** the insert (10) extends axially over substantially the entire length of the tip (8).

4. Hub (1) according to any of claims 1 to 3, **characterised in that** the insert (10) comprises lugs (11) which extend axially in the tip (8), each of said lugs being formed with axially-oriented fibres (f).

5. Hub (1) according to claim 4, **characterised in that** the lugs (11) are equally distributed angularly about the axis (A) of said hub, said lugs together forming a tubular duct (12a) and angular spaces (12b) which are filled with polymer resin.

6. Hub (1) according to claim 5, **characterised in that** each of the lugs (11) extends radially relative to the axis (A) of said hub.

7. Hub (1) according to any of claims 4 to 6, **characterised in that** the insert (10) comprises an uneven number of lugs (11).

8. Hub (1) according to any of claims 1 to 7, **characterised in that** the insert (10) comprises a plate (15) that extends radially in the shield (3), and which comprises radially-oriented fibres (f).

9. Hub (1) according to claim 8 when dependent on claim 4, **characterised in that** the plate (15) comprises an inner wall from which the lugs (11) extend.

10. Hub (1) according to any of claims 1 to 9, **characterised in that** the insert (10) is formed from at least one polymer resin with which the fibres (f) are preimpregnated.

11. Hub (1) according to any of claims 1 to 10, **characterised in that** the shaft (2) has a flange (16) connecting to a rolling element over which the shield (3) is cast.

12. Hub (1) according to claim 11, **characterised in that** the flange (16) has ducts (17) connecting the rolling element to the hub (1), said ducts opening out into the shield (3).

13. Hub (1) according to any of claims 1 to 12, **characterised in that** the composite core (7) has a base that is made from at least one polymer resin charged with fibres, said fibres in particular being randomly dispersed within said resin, the insert (10) being coated in said charged resin.

14. Roller bearing for the assembly of two elements by the relative rotation thereof, said bearing comprising a hub (1) according to any of claims 1 to 13 and an external member positioned around said hub, said external member and the structural shaft (2) of said hub each carrying at least one bearing track (4) which are positioned opposite in order to produce at least one bearing race in which a row of rolling bodies is positioned in order to allow for the relative rotation of the hub (1) and of the external member.
